# EUROPEAN PATENT SPECIFICATION

(11) **EP 2 024 296 B1**
(45) Date of publication and mention of the grant of the patent: **10.04.2019**
(21) Application number: 07724725.2
(22) Date of filing: 30.04.2007
(51) Int. Cl.: C04B 26/02, C08K 7/22, C09D 5/34, C08K 7/28, C04B 111/40

(54) **PLASTER LEVELLING COMPOSITIONS**
PUTZNIVELLIERUNGSZUSAMMENSETZUNGEN
COMPOSITIONS D'ENDUIT DE NIVELLEMENT

(30) Priority: 12.05.2006 GB 0609409
(43) Date of publication of application: 18.02.2009
(73) Proprietor: Akzo Nobel Coatings International B.V., 6824 BM Arnhem (NL)
(72) Inventor: VAN EEK, Gerrit, Benjamin, NL-4204 CM Gorinchem (NL); VAN DER LAAK-CORSTEN, Audrey, Rosalia, Gerdina, NL-5045 DL Tilburg (NL)
(74) Representative: Akzo Nobel IP Department
(86) International application number: PCT/EP2007/003798
(87) International publication number: WO 2007/131618

(56) References cited:
- EP-A- 1 593 659
- EP-A1- 0 947 528
- EP-B1- 1 924 535
- WO-A-03/040243
- FR-A- 2 306 246
- US-A- 4 904 709
- "NOBLITE Micorspheres" TECHNICAL DATA SHEET, [Online] 2006, XP002454345 Retrieved from the Internet: URL:http://www.noblite.com/en/index_data.h tml> [retrieved on 2007-10-09]

## Description

This invention relates to one pack aqueous plaster levelling compositions for use over textured wallpapers and the use of such levelling compositions to obliterate the texture.

Interior walls of domestic and commercial properties, such as houses and offices, are often decorated with wallcoverings. The wallcoverings may be paper or, increasingly nowadays, paper coated with a thin layer of a plastic material, usually plasticized poly vinyl chloride. The latter are often referred to as vinyl wallcoverings. In either case, the wallcovering is applied to the wall surface using an aqueous adhesive. Such adhesives are almost exclusively solutions of high molecular

weight hydrophilic starches and cellulose ether polymers. The advantage of such polysaccharide based adhesives is that, before they dry and set, they allow the wallcovering to be moved on the wall during the decorating process so that the abutting lengths of wallcovering may be closely aligned or, where a pattern is present, matched.

The wallcoverings are frequently textured to give a non-smooth surface. This texture or relief may be produced for example, by an embossing process to form a type of wallpaper known as Anaglypta, or by embedding small chips of wood in the paper to form woodchip wallpaper. For the vinyl types, the surface texture is generated by blowing agents, such as diazo compounds, incorporated into the plastic layer, which on heating during the manufacturing process, decompose to release nitrogen thereby producing a soft feel blown vinyl effect. Such blown vinyls often have a deeper texture than the Anaglypta or woodchip wallcoverings. Textured wallcoverings further include Flock and Hessian wallpapers.

Of course, wallcoverings of any type do not last for ever, either due to changing tastes or through wear resulting from normal use. Where a new colour scheme is required for the wall and the wallcovering is not damaged, it is possible to simply repaint it. However, this can only be carried out once or twice as the increasing layers of paint tend to reduce the sharpness of the original texture. Inevitably, there comes a time when the wallcovering is either worn beyond repair or the existing textured surface is no longer desired. In such circumstances, the only solution, at present, is to remove the existing wallcovering. Typical ways of removing wallcoverings are generally time consuming and messy and many require rectification of damage caused to the wall plaster by the sharp edges of the scraping tools generally used. Most commonly used methods involve softening and/or resolvating of the adhesive by some means. Such means include applying water, often containing surfactants, to the wallcovering or by using steam under pressure. Both of these methods are aggressive and can result in softening of the plaster. Using steam can also produce uncomfortably high humidity, especially in an enclosed space.

One potential alternative to removing textured wallcoverings is to use a plaster levelling composition or leveller to fill the valleys that produce the texture. In this way the texture is obliterated and a smooth new surface is provided which can be redecorated, for example by painting. Unfortunately, when we have attempted this with known plaster formulations, the wallcovering rapidly begins to bubble and lift, eventually pulling away completely at the edges and finally peeling away from the wall.

Known plaster compositions are normally used to fill imperfections such as cracks and gaps in the plaster surfaces found on walls. These are usually referred to as fillers. Where they are particularly formulated to provide a smooth surface over a large area for example in cases where the existing plaster has been damaged, they are referred to as levellers. All plasters fall into two general types; powder and ready mixed.

Powder plasters are comprised predominantly of a single hydraulic binder namely calcium sulphate hemihydrate (CaSO₄.1/2H₂O). On mixing with water, the hemihydrate hydrates to the dihydrate (CaSO₄.2H₂O) producing on evaporation of the excess water a crystalline three dimensional matrix resulting in a hard, sandable surface capable of producing a very smooth substrate. Ready-mixed plasters, however, generally comprise water, organic polymers, usually as dispersions and particulate inorganic materials. In such cases and where calcium sulphate is used as the inorganic material, it is in the form of the dihydrate, or fully hardened form. The ready mix filler simply sets by coalescence of the organic polymer particles to form a continuous film. Where calcium dihydrate is used as the only extender in a ready mixed plaster, the resulting dried surface can be difficult to sand. This is because such plasters are soft compared to the powder plasters. Consequently, ready mixed plasters usually contain little if any calcium sulphate but rather are based on different extenders such as calcium carbonate, for example calcite; or calcium magnesium carbonate, for example dolomite. These have the additional advantage of being lower cost too.

EP 1 5393 659 A1 discloses filling pastes for filling the gaps between abutting plaster boards, comprising 5-10 wt% expanded perlite as low density filler.

FR 2 306 246 A discloses surfacing agents comprising polyacrylate binders and lightweight glass bubbles.

EP1 924 535 B1 discloses lightweight plasters comprising lightweight fillers having a density < 1 g cm⁻³.

As mentioned above, the problem associated with using such known plasters as levellers is that the wallcovering peels away from the wall. It appears that the combination of water content and high density or specific gravity of the known plaster formulations conspire to first redissolve or at least swell the adhesive causing the wallcovering to start to lift away from the wall, whilst the weight of the plaster acting on the wallcovering gradually peels the paper away from the wall itself. This is particularly so at the abutting edges where the water can seep in, even in the case of the vinyls which are substantially impermeable to water. A further problem is that the prior art plasters do not adhere well to the polymer coated papers such as the vinyls resulting in the plaster simply falling off the wallcovering soon after application.

We have now developed novel plaster levelling compositions of low density that can be used to produce a smooth surface over textured wallcoverings and which do not suffer the problems of the prior art plasters.

Accordingly there is provided a one pack aqueous plaster leveller composition of density from 0.3 to 1,2 g cm⁻³, comprising on a volume basis
i) from 3 to 15%, preferably from 5 to 10% of film forming polymer
ii) from 1 to 20%, preferably from 12 to 20% of non film forming particles of density greater than 1 g cm⁻³
iii) from 15 to 65%, preferably from 25 to 55% of non film forming particles of density up to 1 g cm⁻³
iv) the balance being water where i)+ii)+iii)+iv) = 100%;
which is free of any particles of density up to 1 g cm⁻³ derived from Perlite.

Unless otherwise started, references to particle density are to the particles themselves rather than the bulk density of a powder of those particles.

The composition is one pack and/or non-curing. By this is meant that the composition does not require any reactive component to be added in order for it to attain its final properties.

Preferably, the particles of density greater than 1g cm⁻³ are selected from the group consisting of calcium sulphate dihydrate, calcium carbonate, calcium magnesium carbonate and silica.

Preferably the particles of density up to 1g cm⁻³ are selected from the group consisting of hollow glass spheres or hollow non film forming polymeric spheres.

The density of the plaster leveller must not be greater than 1.2 g cm⁻³ otherwise the weight of plaster on the wallcovering necessary to cover and obliterate the texture beneath is so high that the wallcovering forms bubbles and lifts at the abutting edges and gradually peels away from the wall. To cover a typical strip of wallcovering of 2 metres length and 0.5 metre width with a 2 mm layer of known plaster of density 1.5 g cm⁻³ requires 3 kg of material. The density of the plaster composition is preferably from 0.3 to 1.1 g cm⁻³, more preferably from 0.4 to 1.1 g cm⁻³ and most preferably from 0.5 to 1.0 g cm⁻³.

The density of the low density particles of type iii) is preferably up to 0.80 g cm⁻³ in order that the formulator has as much flexibility as possible to incorporate other materials, such as additives, in the composition whilst keeping the density in the specified range. More preferably, the density of the materials is from 0.10 to 0.80, even more preferably from 0.10 to 0.50, still more preferably from 0.10 to 0.25 g cm⁻³.

Low density particles may be inorganic, for example, glass; or organic, for example, polymeric such as polyurethane or polyacrylonitrile. Usually, they are microspheres or chips of the inorganic or organic material containing trapped gas.

Suitable examples of the hollow, or single gas cell, inorganic microspheres or microballoons, are made from glass and can be manufactured by spray drying glass containing a blowing agent. These are available from 3M under the name Scotchlite™ having density of from 0.1 g cm⁻³ to 0.5 g cm⁻³. Suitable examples of such microspheres include Scotchlite K11, K14, K15, K20, K25, K37 and K46. An alternative source of the single gas cell ceramic/glass microsphere is Fly Ash, an aluminosilicate waste product from coal burning power stations. The microspheres are separated from the Fly Ash and are commercially available as Fillite™ from Trelleborg Fillite Ltd. Such microspheres range in size from 5 to 500 microns and have a density of from 0.6 to 0.85 g cm⁻³.

As well as these single gas cell types are the multi-cell glass microspheres. These have many small bubbles of trapped gas within the microsphere, unlike Scotchlite™ and Fillite™, which have a single bubble. An example of such a material is Extendospheres™, available from Sphere One Inc., Chatanooga, USA. These range in average particle size of from about 30 to 150 microns containing particles ranging from about 10 to 500 microns. The density of these particles is typically from 0.14 to 0.40 g cm⁻³.

Microspheres derived from Perlite, for example Noblite and some of the Extendosphere grades, tend to be weak. In some circumstances they may break during the manufacture of the leveller, or even in use, during application to a substrate. The compositions of the invention are free of microspheres/particles derived from Perlite. Suitable examples of the polymeric low density microspheres are available from Pierce and Stevens as Dualite™. They are single cell hollow spheres of low density. Dualite M 6001 AE is such an example comprising hollow polyacrylonitrile microspheres of density of 0.13 g cm⁻³ and a mean particle size of 40 microns.

Preferably, the mean diameter of the hollow microspheres is from about 20 to 200 microns, more preferably from 25 to 150 microns, even more preferably from 30 to 90 microns and most preferably from 30 to 60 microns.

The total amount of water in the formulation is preferably up to 50%, more preferably, up to 30% and even more preferably from 30 to 50% of the total formulation calculated on a volume basis. Minimum amounts of water are preferred as this reduces the likelihood of the adhesive being resolvated and thus causing bubbles and detachment of the wallcovering. In addition, high amounts of water also reduce the solids content of the plaster thereby reducing the build or thickness of the plaster when dry and thus requiring more coats to obliterate the texture.

The plaster composition contains film forming resins to help bind the inorganic particles together. Suitable such resins include addition polymers and condensation polymers. The term polymer is used herein to describe both homopolymers and copolymers.

Suitable examples of addition polymers can be derived from acrylic acid esters and methacrylic acid esters, amides, nitriles, vinyl monomers such as styrene and its derivatives and vinyl esters such as vinyl acetate, vinyl versatate and di-alkyl maleate esters. Acrylic polymers and polymers of vinyl esters and acrylic acid esters are preferred.

Using the nomenclature (meth)acrylate to represent both acrylate and methacrylate, suitable (meth)acrylic acid esters include the alkyl esters, preferably methyl (meth)acrylate, propyl (meth)acrylate, butyl (meth)acrylate, 2-ethyl hexyl (meth)acrylate and alkoxy poly(oxyethylene) (meth)acrylate. Small amounts of acrylic acid and/or methacrylic acid may also be used. Hydroxy functional monomers such as hydroxy ethyl (meth)acrylate and/or hydroxy isopropyl (meth)acrylate, may also be included. Preferably the addition polymer is derived from the esters of (meth)acrylic acid.

Suitable examples of condensation polymers include polyesters and polyurethanes. Urethane-acrylic hybrid polymers, where the urethane and acrylic addition polymer portion are closely associated may also be used. Where the polymer is a polyurethane it is preferably, nonreactive.

The glass transition temperature, or Tg of the addition polymer may be varied by copolymerising monomers of appropriate Tg. Similarly, by varying the amount of hard and soft monomers, the Tg of the condensation polymers may also be varied. In this way, polymers which are hard, soft or intermediate Tg can be made which can produce a range of desirable physical properties, such as hardness in the dried coating. Preferably, the Tg is from -10 to 35°C, more preferably from 0 to 25°C and yet more preferably from 5 to 20°C and most preferably from 5 to 15°C.

Preferably the film forming resin is an aqueous dispersion polymer and more preferably the liquid carrier medium is substantially water. The weight average particle diameter of such latexes is preferably from 0.01 to 5 microns, more preferably from 0.5 to 3 microns and most preferably from 0.1 to 1 micron. Smaller particles are preferred as they are generally better binders; this is especially important at the low binders typically used when formulating plasters of the invention. Preferably they are made by emulsion polymerisation process.

Preferably the total pigment volume concentration (PVC) is from 50 to 92 %, with the lower limit being from 50 to 91% and, independently, the upper limit being from 51 to 92%.

The plaster composition may also advantageously contain ingredients selected from the group consisting of coloured pigments, dispersants, organic solvents, plasticizers, flow additives, antifoams, fibres and antimicrobials.

The level of organic solvents should be kept as low as possible so as to minimise any further reduction of solids, as previously mentioned. Preferably, the leveller formulation is substantially free of organic solvent and more preferably completely free of organic solvent so that the environmental impact arising from the use of the leveller, and any malodours, is reduced.

Fibres, in particular hydrophilic ones such as those derived from cellulose, are useful in influencing the drying rate of the plaster leveller, usually by reducing it. They are also believed to improve the mechanical properties of the plaster.

In another aspect of the invention, there is provided the use of an aqueous plaster composition of the invention, as a leveller when applied over textured wallcoverings adhered to a wall or ceiling using water soluble or water swellable adhesive to provide a smooth and level surface whereby the wallcovering texture is obliterated wherein the density of the composition is from 0.3 to 1.2 g cm⁻³.

Preferably, a first coat of the plaster is applied to the wallcovering surface at sufficient thickness to cover the texture, the composition is allowed to dry and then a second, thinner coat is applied to provide a smooth final surface. The dried surface is optionally sandable to enable any imperfections to be removed.

Preferably, the viscosity of the plaster at a shear stress of from 10 to 100 Pa and measured at 25°C does not exceed 5000 Pa.s, more preferably from 1000 to 5000 Pa.s, even more preferably from 1000 to 3000 Pa.s. If the viscosity is greater than the upper limit, the force required to spread the plaster becomes high enough that the wallcovering beneath can be damaged. This is reflected in the yield stress, which itself should preferably not exceed 800 Pa, more preferably from 50 to 500, even more preferably 10 to 300 and most preferably from 10 to 50 Pa. If the viscosity is below the lower limit, the plaster tends to run, causing unsightly sags.

Wallcoverings such as Anaglypta amd woodchip are most vulnerable as they are paper-based and thus, when the filler is applied, some of the water in the composition soaks through. Inevitably, this reduces the wet strength of these wallcoverings making them vulnerable to damage. The vinyls are less susceptible to such damage as the plastic coating is largely unaffected by the water. Nevertheless, the edges remain susceptible.

The leveller may be applied to the wallcovering using conventional tools such as a float or a blade. The latter is preferred as it gives better control of pick-up of the plaster from a container and application to the wallcovering. Preferably, the leveller is applied in a two coat process where a first thick coat is applied to just cover the texture of the wallcovering and is allowed to dry, preferably for 3 to 4 hours after which time a second, thinner coat is applied to give the final smooth finish, following which it is allowed to dry, preferably over a further 24 hours. When dry, minor imperfections may be removed by sanding.

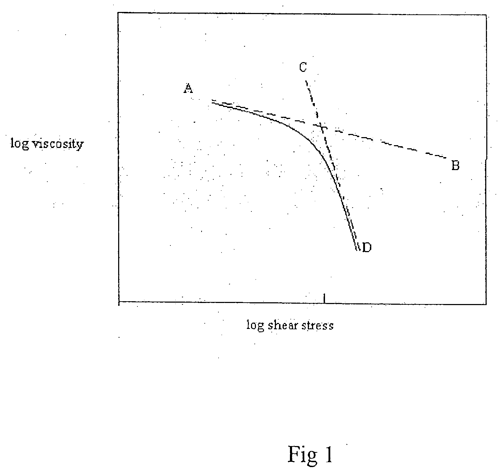

Figure 1 is a plot of viscosity vs shear stress of a plaster leveller composition.

### Tests

The following tests/measurements were made on the plaster.

### Specific gravity

Specific gravity was determined at 21°C using a Sheen density cup.

### Viscosity and Shear Stress

The samples were tested at 25°C using a Carrimed CSL 100 Rheometer (available from TA Instruments, Crawley, UK) fitted with 2 cm parallel plates with a gap of 2 mm between them. Both plates were roughened by attaching Emery paper (3M 736P100 grade). The samples were exposed to a single shear stress cycle from 6 Pa to 2000 Pa scanning logarithmically with a sweep duration of two minutes. Referring to Figure 1, the maximum or peak viscosity at shear stress from 10 to 100 Pa is simply read off the viscosity scale. The yield stress of the sample is obtained using an extrapolated onset method. A perpendicular is dropped to the shear stress axis from the intersection of two tangent lines, AB and CD. The yield stress of the sample is read off the shear stress axis at 1.

### Drying time

The drying time of the plaster leveller was assessed by applying a 2 mm thick layer of it onto a 30 x 5 cm piece of plywood. The drying time is measured as the time to achieve constant weight signifying that the plaster has dried all the way through.

### Lining paper detachment test

This test determines the length of time taken for a 30 x 5cm strip of 1000 grade lining paper coated with leveller to detach from a plywood panel board. It is an accelerated test and a pass or fail is assessed relative to a comparative or control plaster that is known to fail in real life application; ie when the test is carried out on a floor to ceiling length strip of wallcovering, which is adhered to a wall using full strength adhesive, the wallcovering detaches from the wall using the control plaster. A pass is recorded if the test plaster shows no bubbling or detachment at all or it survives at least 50% longer than the control before detaching. In order to accelerate the test a reduced strength solution of the adhesive is used.

A 2% by weight solution of a starch based adhesive (Polycell All Purpose Adhesive) is made in water. About 12 -13 g of the adhesive solution is applied to a 30cm x 30cm sized sheet of 1000 grade lining paper and the paper positioned on a similarly sized portion of 4mm plywood. The paper is allowed to dry over 24 hours. The plywood, with the paper adhering to it, is cut into 30 x 5 cm strips and a uniform layer of 3mm of plaster is applied to it using a template and a blade. The strip is held horizontally with the plaster face down and the time for the paper to detach after the plaster was applied is measured.

The invention will now be illustrated by the following examples.

### Ingredients

The ingredient used in the examples are listed below.

Acticide AFM (MIT and BIT and hydroxymethyl

ureido derivatives) was obtained from Thor Specialities Ltd.

Indunal A (low molecular weight ammonium polyacrylate 30wt% nv) was obtained from Indulor Chemie GmbH.

Walocel MW 40000 PFV (methylhydroxyethylcellulose; substitution 1.4-1.7) was obtained from Wolff Cellulosics GmbH.

Attapulgite Clay (MgAl silicate clay thickener) was obtained from Engelhard Corporation.

Jelucel HM 200 (cellulose fibres of mean length 130 microns; mean width 20 microns) was obtained from Jelu-Werk Jodef Ehrler GmbH.

Emultex VV 531(vinyl acetate terpolymer dispersion 52wt% nv, Tg 5-12°C) was obtained from Synthomer Ltd.

3M Glass Bubble K15 (density 0.15 g cm⁻³; mean diameter 60 microns)was obtained from 3M Specialty Materials.

Microdol A 100 was obtained from Omya (Benelux).

Natrosol 250 HR was obtained from Hercules, Aqualon Division.

Elotex WS 45 (vinyl acetate/vinyl versatate redispersible) copolymer powder was obtained from Elotex AG.

Tioxide TR 92 was obtained from Huntsman Tioxide.

Ulmerweiss WL (calcium carbonate) was obtained from Eduard Merkle GmbH & Co.

Fillite 300 W and Fillite 200/7 (density 0.7 g cm⁻³) was obtained from Trelleborg Fillite Ltd

Dispelair CF 246 was obtained from Blackburn Chemicals Ltd. Durcal 130 was obtained from Omya (Benelux).

### Examples

The following examples were made and evaluated.

### Example 1

The ingredients listed in Table 1 were converted into a plaster using the method described below.

To a mixing vessel was added the water (1) followed by Indunal A, a dispersant (3) and Acticide AFM, a biocide (2) whilst stirring. To this mixture was added Walocel MW 40000 PFV, a cellulose thickener (4), Attapulgite clay. a thickener (5) and Jelucel HM 200, cellulose fibres (6). The resulting mixture was stirred until a smooth paste was achieved, following which was added Emultex VV 531, a film forming polymer (7), 3M Glass Bubble K15, spray dried glass microspheres (8) and Microdol A 100 (9). The mixture was stirred until a smooth, homogeneous paste was achieved after which it was de-aerated by sealing the vessel and applying a vacuum.

**Table 1**

| | wt% | vol% |
|---|---|---|
| 1. Water | 31.561 | 31.703 |
| 2. Acticide AFM | 0.100 | 0.082 |
| 3. Indunal A | 0.100 | 0.090 |
| 4. Walocell MW 40000 PFV | 0.400 | 0.309 |
| 5. Attapulgite Clay | 0.799 | 0.311 |
| 6. Jelucel HM 200 | 0.499 | 0.386 |
| 7. Emultex VV 531 | 14.983 | 14.334 |
| 8.3M Glass Bubbles K15 | 5.456 | 36.535 |
| 9. Microdol A 100 | 46.102 | 16.250 |
| Total | 100.000 | 100.000 |

The density of the plaster was 0.95g cm⁻³.

### Example 2

The ingredients listed in Table 2 were converted into a plaster using the same method as for Example 1.

**Table 2**

| | wt% | vol% |
|---|---|---|
| 1. Water | 43.529 | 40.246 |
| 2. Acticide AFM | 0.145 | 0.110 |
| 3. Indunal A | 0.283 | 0.234 |
| 4. Natrosol 250 HR | 0.646 | 0.460 |
| 5. Attapulgite Clay | 1.091 | 0.391 |
| 6. Jelucel HM 200 | 1.293 | 0.920 |
| 7. Emultex VV 531 | 13.330 | 11.748 |
| 8. Elotex WS 45 | 1.373 | 1.155 |
| 9. Fillite 300 W | 32.315 | 42.719 |
| 10. Tioxide TR 92 | 1.777 | 0.462 |
| 11. Ulmerweiss WL | 4.039 | 1.384 |
| 12. Dispelair CF 246 | 0.178 | 0.171 |
| Total | 100.000 | 100.000 |

The density of the plaster was 0.86g cm⁻³.

### Comparative Example A

The ingredients listed in Table 3 were converted into a prior art plaster using the same method as described in Example 1.

**Table 3**

| | wt% | vol% |
|---|---|---|
| 1. Water | 23.600 | 44.930 |
| 2. Acticide AFM | 0.100 | 0.156 |
| 3. Indunal A | 0.004 | 0.007 |
| 4. Walocel MW 40000 PFV | 0.300 | 0.439 |
| 5. Attapulgite Clay | 0.500 | 0.369 |
| 6. Jelucel HM 200 | 0.300 | 0.439 |
| 7. Emultex VV 531 | 3.000 | 5.439 |
| 8. Glass microspheres | 0 | 0 |
| 9. Microdol A 100 | 72.196 | 48.221 |
| Total | 100.000 | 100.000 |

The density of the plaster was 1.66 g cm⁻³

### Results

Examples 1 and 2 and Comparative Examples A were evaluated for a variety of properties as recorded in Table 4. They were also applied to the paper according to the procedure described above and the detachment times determined.

The data is summarised in Table 4

**Table 4**

| **Property** | **Example 1** | **Example 2** | **Comparative Example A** |
|---|---|---|---|
| **Density g cm⁻³** | 0.95 | 0.86 | 1.66 |
| **Time to detach/hours** | Did not detach | Did not detach | 4 |
| **Peak viscosity (Pa.s) between 10- 100 Pa** | 2900 | NA | 53400 |
| **Yield stress/Pa** | 250 | NA | 1190 |
| **Ease of application** | Easy. Low drag. | Easy. Low drag. | Difficult. Firm. |
| **Drying time/hours** | 12-24 | 12-24 | 6-12 |
| **Binder/solids wt %** | 12.9 | 16.8 | 2.1 |
| **Solids content wt %** | 61 | 50 | 75 |
| **PVC/%** | 88 | 87 | 94 |
| **Adhesion to vinyl wallcovering** | Good | Good | Very poor |

As can be seen, Example 1 has a much lower density than comparative Example A and a much longer detachment time. A time of 12 hours to detach using this test correlates to no bubbling or peeling on the full scale. On the other hand, a time of 4 hours would result in bubbling and peeling on the full scale.

The benefits of formulating at lower peak viscosity and lower shear stress is also seen in that Example 1 is easier to apply than Comparative Example A.

### Further Comparative examples.

A further set of comparative examples were made using the ingredients listed in Tables 5 and 6 and the method described in Example 1. The results are summarised in Table 7.

### Comparative Example B

**Table 5**

| | wt% | vol% |
|---|---|---|
| 1. Water | 30.570 | 41.536 |
| 2. Acticide AFM | 0.100 | 0.111 |
| 3. Indunal A | 0.142 | 0.173 |
| 4. Walocel MW 40000 PFV | 0.640 | 0.669 |
| 5. Attapulgite Clay | 2.133 | 1.123 |
| 6. Jelucel HM 200 | 1.280 | 1.338 |
| 7. Emultex VV531 | 7.963 | 10.304 |
| 8. Elotex WS 45 | 1.280 | 1.581 |
| 9. Tioxide TR 92 | 1.777 | 0.627 |
| 10.Microdol A 100 | 42.656 | 20.337 |
| 11. Fillite 200/7 | 11.375 | 22.080 |
| 12.Dispelair CF 246 | 0.085 | 0.121 |
| Total | 100.000 | 100.000 |

The density of the plaster was 1.35 **g cm⁻³.**

### Comparative Example C

**Table 6**

| | wt% | vol% |
|---|---|---|
| 1. Water | 10.288 | 18.467 |
| 2. Acticide AFM | 0.100 | 0.147 |
| 3. Indunal A | 0.164 | 0.263 |
| 4. Walocel MW 40000 PFV | 0.410 | 0.566 |
| 5. Attapulgite Clay | 0.714 | 0.497 |
| 6. Jelucel HM 200 | 0.714 | 0.986 |
| 7. Emultex VV531 | 21.012 | 35.919 |
| 8. Elotex WS 45 | 1.061 | 1.731 |
| 9. Microdol A 100 | 61.234 | 38.564 |
| 10. Durcal 130 | 4.303 | 2.860 |
| Total | 100.000 | 100.000 |

The density of the plaster was 1.7 **g cm⁻³.**

### Results

Plasters of Examples 1 and 2 were re-evaluated and Comparative Examples B and C were evaluated. The data is summarised in Table 7.

Table 6 shows a summary of the results

**Table 7**

| **Plaster** | **Density g cm⁻³** | **Time to detach Minutes** | **Ease of application** |
|---|---|---|---|
| **Example 1** | 0.95 | Did not detach or bubble | Easy. Low drag. |
| **Example 2** | 0.86 | Did not detach or bubble | Easy. Low drag. |
| **Comparative Example B** | 1.35 | 70 | Borderline/Unacceptable |
| **Comparative Example C** | 1.70 | 67.5 | Very poor |

It can be seen that the low density plaster of Example 1 did not detach at all in this test. In addition, it applied well, in contrast to the high density Comparative Examples B and C that were borderline unacceptable or very poor for application because of the high force required to spread these plasters. In addition the paper detached within 67.5 and 70 minutes.

## Claims

1. A one pack aqueous plaster leveller composition of density from 0.3 to 1.2 g cm⁻³, comprising on a volume basis
i) from 3 to 15% film forming polymer
ii) from 1 to 20% of non film forming particles of density greater than 1 g cm⁻³
iii) from 15 to 65% of non film forming particles of density up to 1 g cm⁻³
iv) the balance being water
where i)+ii)+iii)+iv) = 100%;
which is free of any particles of density up to 1 g cm⁻³ derived from Perlite.

2. An aqueous plaster leveller composition according to claim 1 where the particles of density greater than 1 g cm⁻³ comprise from 12 to 20% of the composition.

3. A plaster leveller composition according to any one of the preceding claims where the film forming polymer is an aqueous dispersion polymer.

4. A plaster leveller composition according to any one of the preceding claims having a maximum yield stress of 800 Pa when measured at 25°C.

5. A plaster leveller composition according to any one of the preceding claims having a maximum viscosity, when measured at 25°C and at a shear stress of from 10 to 100 Pa, of 5000 Pa.s.

6. A plaster leveller composition according to any one of the preceding claims where the particles of density up to 1 g cm⁻³ comprise from 25 to 55% of the composition.

7. A plaster leveller composition according to any one of the preceding claims where the particles of density up to 1g cm⁻³ are selected from the group consisting of hollow glass spheres and hollow non film forming polymeric spheres.

8. A plaster leveller composition according to claim 7 where the spheres are of the single gas cell type.

9. A plaster leveller composition according to any one of the preceding claims where the density of the particles of density up to 1g cm⁻³ is from 0.1 to 0.8 g cm⁻³.

10. A plaster leveller composition according to any one of the preceding claims having a density of from 0.3 to 1.1 g cm⁻³.

11. A plaster leveller composition according to any one of the preceding claims where the particles of density greater than 1g cm⁻³ are selected from the group consisting of calcium sulphate dihydrate, calcium carbonate, calcium magnesium carbonate and silica.

12. A plaster leveller composition according to any one of the preceding claims and further comprising additives selected from the group consisting of coloured pigments, dispersants, organic solvents, plasticizers, flow additives, antifoams, fibres and antimicrobials.

13. A plaster leveller composition according to any one of the preceding claims comprising from 35 to 50% water.

14. A plaster leveller composition according to any one of the preceding claims having a total pigment volume concentration (PVC) from 50 to 92%.

15. Use of an aqueous plaster composition, as described in any one of the preceding claims, as a leveller when applied over textured wallcoverings adhered to a wall or ceiling using water soluble or water swellable adhesive, to provide a smooth and level surface whereby the wallcovering texture is obliterated; wherein the density of the composition is from 0.3 to 1.2 g cm⁻³.

16. Use of a plaster composition according to claim 15 where a first coat is applied to the wallcovering surface of sufficient thickness to cover the texture, allowing the composition to dry and then applying a second, thinner coat to provide a smooth final surface.

## Patentansprüche

1. Wässrige Einkomponenten-Putzausgleichszusammensetzung mit einer Dichte von 0,3 bis 1,2 g cm⁻³, umfassend auf einer Volumenbasis
i) von 3 bis 15% filmbildendes Polymer
ii) von 1 bis 20% nicht filmbildende Partikel einer Dichte größer als 1 g cm⁻³
iii) von 15 bis 65% nicht filmbildende Partikel einer Dichte bis zu 1 g cm⁻³
iv) wobei der Rest Wasser ist,
wobei i)+ii)+iii)+iv) = 100% sind;
die frei ist von jeglichen Partikeln einer Dichte bis zu 1 g cm⁻³, abgeleitet aus Perlit.

2. Wässrige Putzausgleichszusammensetzung nach Anspruch 1, wobei die Partikel einer Dichte größer als 1 g cm⁻³ von 12 bis 20% der Zusammensetzung umfassen.

3. Putzausgleichszusammensetzung nach einem der vorhergehenden Ansprüche, wobei das filmbildende Polymer ein wässriges Dispersionspolymer ist.

4. Putzausgleichszusammensetzung nach einem der vorhergehenden Ansprüche mit einer maximalen Fließspannung von 800 Pa, gemessen bei 25 °C.

5. Putzausgleichszusammensetzung nach einem der vorhergehenden Ansprüche mit einer maximalen Viskosität von 5000 Pa.s., gemessen bei 25 °C und bei einer Scherspannung von 10 bis 100 Pa.

6. Putzausgleichszusammensetzung nach einem der vorhergehenden Ansprüche, wobei die Partikel der Dichte bis 1 g cm⁻³ von 25 bis 55% der Zusammensetzung umfassen.

7. Putzausgleichszusammensetzung nach einem der vorhergehenden Ansprüche, wobei die Partikel der Dichte bis 1 g cm⁻³ ausgewählt sind aus der Gruppe, bestehend aus hohlen Glaskugeln und hohlen, nicht filmbildenden Polymerkugeln.

8. Putzausgleichszusammensetzung nach Anspruch 7, wobei die Kugeln nach Art von Einzelglaszellen sind.

9. Putzausgleichszusammensetzung nach einem der vorhergehenden Ansprüche, wobei die Dichte der Partikel der Dichte bis 1 g cm⁻³ von 0,1 bis 0,8 g cm⁻³ beträgt.

10. Putzausgleichszusammensetzung nach einem der vorhergehenden Ansprüche mit einer Dichte von 0,3 bis 1,1 g cm⁻³.

11. Putzausgleichszusammensetzung nach einem der vorhergehenden Ansprüche, wobei die Partikel der Dichte größer als 1 g cm⁻³ ausgewählt sind aus der Gruppe, bestehend aus Kalziumsulfat-Dihydrat, Kalziumkarbonat, Kalzium-Magnesium-Karbonat und Silika.

12. Putzausgleichszusammensetzung nach einem der vorhergehenden Ansprüche und weiterhin umfassend Additive, ausgewählt aus der Gruppe, bestehend aus Farbpigmenten, Dispergiermitteln, organischen Lösungsmitteln, Weichmachern, Fließzusätzen, Antischaummitteln, Fasern und antimikrobiellen Mitteln.

13. Putzausgleichszusammensetzung nach einem der vorhergehenden Ansprüche, umfassend von 35 bis 50% Wasser.

14. Putzausgleichszusammensetzung nach einem der vorhergehenden Ansprüche mit einer Gesamt-Pigment-Volumen-Konzentration (PVC) von 50 bis 92%.

15. Verwendung einer wässrigen Putzzusammensetzung nach einem der vorhergehenden Ansprüche als Ausgleich beim Auftragen über texturierter Wandverkleidung, die unter Verwendung eines wasserlöslichen oder in Wasser quellbaren Klebemittels an der Wand oder Decke klebt, um eine glatte und ebene Oberfläche bereitzustellen, wodurch die Textur der Wandverkleidung verdeckt wird; wobei die Dichte der Zusammensetzung von 0,3 bis 1,2 g cm⁻³ beträgt.

16. Verwendung einer Putzzusammensetzung nach Anspruch 15, wobei eine erste Schicht ausreichender Stärke auf die Oberfläche der Wandverkleidung aufgetragen wird, um die Textur abzudecken, man die Zusammensetzung trocknen lässt und dann eine zweite, dünnere Schicht aufträgt, um eine glatte, endgültige Oberfläche bereitzustellen.

## Revendications

1. Composition aqueuse d'enduit de nivellement monocomposant de densité allant de 0,3 à 1,2 g cm⁻³, comprenant en volume
i) 3 à 15% de polymère filmogène
ii) 1 à 20% de particules non filmogènes de densité supérieure à 1 g cm⁻³
iii) 15 à 65% de particules non filmogènes de densité allant jusqu'à 1 g cm⁻³
iv) le reste étant de l'eau
où i) + ii) + iii) + iv) = 100% ;
qui est exempte de toute particule de densité allant jusqu'à 1 g cm⁻³ dérivée de la Perlite.

2. Composition aqueuse d'enduit de nivellement selon la revendication 1, dans laquelle les particules de densité supérieure à 1 g cm⁻³ constituent 12 à 20% de la composition.

3. Composition d'enduit de nivellement selon l'une quelconque des revendications précédentes, dans laquelle le polymère filmogène est un polymère en dispersion aqueuse.

4. Composition d'enduit de nivellement selon l'une quelconque des revendications précédentes, ayant une limite apparente d'élasticité maximale de 800 Pa lorsqu'elle est mesurée à 25°C.

5. Composition d'enduit de nivellement selon l'une quelconque des revendications précédentes, ayant une viscosité maximale, lorsqu'elle est mesurée à 25°C et à une force de cisaillement allant de 10 à 100 Pa, de 5000 Pa.s.

6. Composition d'enduit de nivellement selon l'une quelconque des revendications précédentes, dans laquelle les particules de densité allant jusqu'à 1 g cm⁻³ constituent 25 à 55% de la composition.

7. Composition d'enduit de nivellement selon l'une quelconque des revendications précédentes, dans laquelle les particules de densité allant jusqu'à 1 g cm⁻³ sont choisies dans le groupe constitué de sphères de verre creuses et de sphères polymères non filmogènes creuses.

8. Composition d'enduit de nivellement selon la revendication 7, dans laquelle les sphères sont du type à cellule à gaz unique.

9. Composition d'enduit de nivellement selon l'une quelconque des revendications précédentes, dans laquelle la densité des particules de densité allant jusqu'à 1 g cm⁻³ est comprise entre 0,1 et 0,8 g cm⁻³.

10. Composition d'enduit de nivellement selon l'une quelconque des revendications précédentes, ayant une densité allant de 0,3 à 1,1 g cm⁻³.

11. Composition d'enduit de nivellement selon l'une quelconque des revendications précédentes, dans laquelle les particules de densité supérieure à 1 g cm⁻³ sont choisies dans le groupe constitué du sulfate de calcium dihydraté, du carbonate de calcium, du carbonate de calcium et de magnésium et de la silice.

12. Composition d'enduit de nivellement selon l'une quelconque des revendications précédentes et comprenant en outre des additifs choisis dans le groupe constitué de pigments colorés, d'agents dispersants, de solvants organiques, de plastifiants, d'additifs d'écoulement, d'agents anti-mousse, de fibres et d'agents antimicrobiens.

13. Composition d'enduit de nivellement selon l'une quelconque des revendications précédentes, comprenant 35 à 50% d'eau.

14. Composition d'enduit de nivellement selon l'une quelconque des revendications précédentes, ayant une concentration pigmentaire volumique totale (PVC) allant de 50 à 92%.

15. Utilisation d'une composition aqueuse d'enduit, telle que décrite dans l'une quelconque des revendications précédentes, comme agent nivelant lorsqu'elle est appliquée sur des revêtements muraux texturés collés à un mur ou à un plafond en utilisant un adhésif hydrosoluble ou gonflant dans l'eau, pour fournir une surface lisse et plane moyennant quoi la texture de revêtement mural est oblitérée ; où la densité de la composition est comprise entre 0,3 et 1,2 g cm⁻³.

16. Utilisation d'une composition d'enduit selon la revendication 15, dans laquelle une première couche est appliquée à la surface de revêtement mural d'épaisseur suffisante pour couvrir la texture, permettant à la composition de sécher et ensuite une deuxième couche plus mince est appliquée pour obtenir une surface finale lisse.
